# EUROPEAN PATENT APPLICATION

(11) **EP 2 624 505 A1**
(43) Date of publication of application: **07.08.2013**
(21) Application number: 11828039.5
(22) Date of filing: 25.08.2011
(51) Int. Cl.: H04L 12/56

(54) **METHOD AND SYSTEM FOR ESTABLISHING, GRAFTING AND CUTTING BIDIRECTIONAL POINT-TO-MULTIPOINT LABEL SWITCHED PATH**

(30) Priority: 30.09.2010 CN 201010507510
(71) Applicant: ZTE Corporation, Shenzhen, Guangdong 518057 (CN)
(72) Inventor: CHEN, Ran, Guangdong 518057 (CN); JIN, Lizhong, Guangdong 518057 (CN); WU, Bo, Guangdong 518057 (CN)
(74) Representative: Smith, Jeremy Robert
(86) International application number: PCT/CN2011/078941
(87) International publication number: WO 2012/041143

(57) **Abstract**

A method and system for establishing a bidirectional Point to Multiple Point Label Switching Path (P2MP LSP) are disclosed. The method includes: starting from a root node, sending a Path message carrying an upstream label used for an uplink path to downstream nodes one by one, each node creating and maintaining an uplink label forwarding table of the bidirectional P2MP LSP; after receiving the Path message, leaf nodes replying a Resv message carrying a generalized label used for a downlink path to upstream nodes which send the Path message to the current node one by one, each node creating and maintaining a downlink label forwarding table of the bidirectional P2MP LSP; and nodes passed by the uplink path and the downlink path of the bidirectional P2MP LSP are the same. A grafting method and a pruning method are also disclosed correspondingly. The bidirectional transmission for MPLS network messages is implemented and go-and-return paths thereof are the same, which reduces the management complexity of the LSP effectively and is able to perform transmission of messages with clock synchronization of IEEE 1588v2 in the MPLS network.

## Description

### Technical Field

The present invention relates to establishment, grafting and pruning of a Point to Multiple Point Label Switching Path (P2MP LSP) in a Multi-protocol Label Switching (MPLS) network, and particularly, to a method and system for establishing the P2MP LSP and grafting and pruning on the P2MP LSP by using an extended Resource ReSerVation Protocol-Traffic Engineering (RSVP-TE).

### Background of the Related Art

With the rapid development of broadcast video services, it starts to bear the broadcast video services on a packet network, thereby urging that a multicast technology has been widely used. For the MPLS technology has advantages on aspects such as traffic engineering, quality of service and reliability and so on, the MPLS multicast technology also has developed rapidly and is carried out standardization in the Internet Engineering Task Force (IETF).

Currently, the MPLS multicast technology mainly uses a Point to Multiple Point (P2MP) Label Switching Path (LSP) as a main body to provide multicast replication and transmission characteristics of traffics. A unidirectional P2MP LSP provides traffic input of an Ingress PE node (or called as a root node) and traffic output of a plurality of Egress PE nodes (or called as leaf nodes), and it can guarantee the multicast transmission of the traffics, that is, each physical link only has one message replication. In addition, since it is the unidirectional LSP, the P2MP LSP traffics can only be replicated from the root node to the leaf nodes but cannot be replicated from the leaf nodes to the root node.

At present, in the existing mechanism, when it is required to perform bidirectional transmission for messages, it needs to go through different LSPs, and a procedure thereof is as follows: a leaf node finding a shortest path between the leaf node itself and a root node by querying its own routing information table, and adding the shortest path as a return path between the leaf node and the root node. Such return path is an independent LSP or IP path from the leaf node to the root node, and a physical path passed by the return path is different from a physical path from the root node to the leaf node.

Therefore, the PE not only needs to manage downlink paths of the unidirectional P2MP LSP, but also needs to manage return paths from all leaf nodes to the root node; with regard to the MPLS multicast technology which has N (N is greater than 1) Egress PE nodes, it may be required to manage N+1 LSPs, thereby increasing the management complexity of the LSPs greatly.

In addition, based on clock synchronization of the Institute of Electrical and Electronics Engineers (IEEE) 1588v2, when the IEEE 1588v2 is directly deployed in a network, the IEEE 1588v2 clock synchronization adopts synchronization for each node in order to improve clock synchronization precision, since the network cannot provide end-to-end Quality of Service (QoS) and bandwidth guarantee for message transmission based on the IEEE 1588v2 clock; in which, it needs that each node supports the IEEE 1588v2, which will increase cost of deploying devices in the network, and the number of intermediate transmission nodes which can be crossed between a master clock and a slave clock by the IEEE 1588v2 will also be relatively less, which is generally less than 5.

The clock synchronization of the IEEE 1588v2 also needs to be implemented through an MPLS network. According to a clock synchronization principle of the IEEE 1588v2, delays for transmission messages of all the nodes are required to be identical, which specifically includes: go-and-return path of the messages being identical, bandwidth of paths passed by messages requiring to be guaranteed, processing of paths needing to possess reliable QoS guarantee, and the multicast technology needing to be used for performing message transmission, to optimize the network resource utilization.

In the existing MPLS network, when the bidirectional transmission of messages is performed, the passed paths are different; therefore, on one hand, the management of LSPs is relatively complicated since more LSPs exist, on the other hand, the requirement that the go-and-return paths of the messages are identical cannot be satisfied when the messages are transmitted with the clock synchronization of the IEEE 1588v2.

### Summary of the Invention

In view of this, the technical problem to be solved by the present invention is to provide a method for establishing a bidirectional point-to-multipoint switching path, which can solve the problem that the management complexity of LSP is high and the clock synchronization of IEEE 1588v2 cannot be applied in an MPLS network.

In order to solve the above problem, the present invention provides a method for establishing a bidirectional Point to Multiple Point Label Switching Path (P2MP LSP), the bidirectional P2MP LSP is established by adopting an extended Resource ReSerVation Protocol-Traffic Engineering (RSVP-TE) in a Multi-protocol Label Switching (MPLS) network, and the method comprises:
starting from a root node of the bidirectional P2MP LSP, sending a Path message carrying an upstream label used for an uplink path to downstream nodes one by one, each node creating and maintaining an uplink label forwarding table of the bidirectional P2MP LSP, thereby establishing the uplink path from leaf nodes to the root node of the bidirectional P2MP LSP;
after receiving the Path message, starting from a leaf node of the bidirectional P2MP LSP, the leaf node replying a Resv message carrying a generalized label used for a downlink path to upstream nodes which send the Path message to the current node one by one, each node creating and maintaining a downlink label forwarding table of the bidirectional P2MP LSP, thereby establishing the downlink path from the root node to the leaf node of the bidirectional P2MP LSP; and
nodes passed by the uplink path and the downlink path of the bidirectional P2MP LSP are the same.

Preferably, establishing the uplink path of the bidirectional P2MP LSP comprises:
the root node of the bidirectional P2MP LSP allocating an upstream label for the bidirectional P2MP LSP, sending a Path message carrying the upstream label allocated by the current node to a downstream node, creating and maintaining an uplink label forwarding table of the bidirectional P2MP LSP on the current node;
after receiving the Path message, an intermediate node of the bidirectional P2MP LSP using an upstream label allocated for the bidirectional P2MP LSP, if no upstream label is allocated for the bidirectional P2MP LSP, allocating an upstream label for the bidirectional P2MP LSP, sending a Path message carrying the upstream label allocated by the current node to a downstream node, creating and maintaining an uplink label forwarding table of the bidirectional P2MP LSP on the current node;
after receiving the Path message, the leaf node of the bidirectional P2MP LSP creating and maintaining an uplink label forwarding table of the bidirectional P2MP LSP on the current node.

Preferably, establishing the downlink path of the bidirectional P2MP LSP comprises:
after receiving the Path message, the leaf node of the bidirectional P2MP LSP allocating a generalized label for the bidirectional P2MP LSP, replying a Resv message carrying the generalized label allocated by the current node to an upstream node, creating and maintaining a downlink label forwarding table of the bidirectional P2MP LSP on the current node;
after receiving the Resv message, the intermediate node of the bidirectional P2MP LSP using a generalized label allocated for the bidirectional P2MP LSP, if no generalized label is allocated for the bidirectional P2MP LSP, allocating a generalized label for the bidirectional P2MP LSP, replying a Resv message carrying the generalized label allocated by the current node to an upstream node, creating and maintaining a downlink label forwarding table of the bidirectional P2MP LSP on the current node;
after receiving the Resv message, the root node of the bidirectional P2MP LSP creating and maintaining a downlink label forwarding table of the bidirectional P2MP LSP on the current node.

Preferably, when the bidirectional P2MP LSP is established, for each leaf node, the root node sends one Path message to a corresponding downstream node; an intermediate node sends one Path message to a corresponding downstream node when receiving one Path message every time, and replies one Resv message to an upstream node when receiving one Resv message every time; and each message respectively carries one destination address of a source-to-leaf sub-Label Switching Path (sub-LSP) containing a transmission link of the message, all the Path messages on the same link carry the same upstream label, and all the Resv messages on the same link carry the same generalized label; or
when the bidirectional P2MP LSP is established, the root node sends only one Path message to each downstream node, an intermediate node sends only one Path message to each downstream node and replies only one Resv message to an upstream node; and each message respectively carries destination addresses of all source-to-leaf sub-LSPs containing a transmission link of the message.

Preferably, after establishments of the downlink path and the uplink path of the bidirectional P2MP LSP are completed, for a message sent by a user and received by the root node, each node searches the downlink label forwarding table of the current node, and forwards the message to a receiving terminal along the downlink path of the bidirectional P2MP LSP;
for a message sent by a user and received by a leaf node, each node searches the uplink label forwarding table of the current node, and forwards the message to a receiving terminal along the uplink path of the bidirectional P2MP LSP.

Correspondingly, a system for a bidirectional Point to Multiple Point Label Switching Path (P2MP LSP) provided by the present invention comprises a root node, an intermediate node and a leaf node of the bidirectional P2MP LSP, wherein each node adopts message interaction of an extended Resource ReSerVation Protocol-Traffic Engineering (RSVP-TE) to establish the bidirectional P2MP LSP, wherein,
the root node is configured to: when starting to establish the bidirectional P2MP LSP, allocate an upstream label for the bidirectional P2MP LSP, send a Path message carrying the upstream label allocated by the current node to a downstream node, create and maintain an uplink label forwarding table of the bidirectional P2MP LSP on the current node;
the intermediate node is configured to: after receiving the Path message, use an upstream label allocated for the bidirectional P2MP LSP, if no upstream label is allocated to the bidirectional P2MP LSP, allocate an upstream label for the bidirectional P2MP LSP, send a Path message carrying the upstream label allocated by the current node to a downstream node, create and maintain an uplink label forwarding table of the bidirectional P2MP LSP on the current node; and
the leaf node is configured to: after receiving the Path message, create and maintain an uplink label forwarding table of the bidirectional P2MP LSP on the current node.

Preferably, the root node is further configured to: after receiving a Resv message, create and maintain a downlink label forwarding table of the bidirectional P2MP LSP on the current node;
the intermediate node is further configured to: after receiving a Resv message, use a generalized label allocated for the bidirectional P2MP LSP, if no generalized label is allocated for the bidirectional P2MP LSP, allocate a generalized label for the bidirectional P2MP LSP, reply a Resv message carrying the generalized label allocated by the current node to an upstream node, create and maintain a downlink label forwarding table of the bidirectional P2MP LSP on the current node; and
the leaf nodes are further configured to: after receiving the Path message, allocate a generalized label for the bidirectional P2MP LSP, reply a Resv message carrying the generalized label allocated by the current node to an upstream node, create and maintain a downlink label forwarding table of the bidirectional P2MP LSP on the current node.

Preferably, for each leaf node, the root node sends one Path message to a corresponding downstream node; the intermediate node sends one Path message to a corresponding downstream node when receiving one Path message every time, and replies one Resv message to an upstream node when receiving one Resv message every time; and each message sent or replied by the root node, the intermediate node and the leaf node respectively carries one destination address of a source-to-leaf sub-Label Switching Path (sub-LSP) containing a transmission link of the message, all the Path messages on the same link carry the same upstream label, and all the Resv messages on the same link carry the same generalized label; or
the root node sends only one Path message to each downstream node; the intermediate node sends only one Path message to each downstream node and replies only one Resv message to an upstream nodes; and each message respectively carries destination addresses of all source-to-leaf sub-LSPs containing a transmission link of the message.

Preferably, the root node is further configured to: for each leaf node to be removed, send a Path Tear message to a downstream node located on a sub-label switching path in which the leaf node to be removed is located;
the intermediate node is further configured to: after receiving the Path Tear message, send a Path Tear message to a downstream node located on the sub-label switching path in which the leaf node to be removed is located; and
all nodes which save information about the leaf node to be removed related to the P2MP LSP delete all the information about the leaf nodes to be removed related to the P2MP LSP.

Preferably, the root node is further configured to: when a new node containing a leaf node is added to the established bidirectional P2MP LSP, for all leaf nodes in the bidirectional P2MP LSP after adding the new node, send a Path message carrying an upstream label allocated by the current node to downstream nodes; or
the root node is further configured to: when a new node containing a leaf node is added to the established bidirectional P2MP LSP, only for newly added leaf node, send a Path message carrying an upstream label allocated by the current node to all downstream nodes on a sub-label switching path of which an destination address is the newly added leaf node.

In the embodiments of the present invention, the bidirectional P2MP LSP is established by adopting the RSVP-TE protocol; specifically, the P2MP LSP downlink path from the root node to the leaf nodes in the bidirectional P2MP LSP is established by carrying the generalized labels in the RSVP-TE Reserve messages, and the uplink path from the leaf nodes to the root node in the bidirectional P2MP LSP is established by carrying the upstream labels in the RSVP-TE Path messages. A message of a user sending end received by the root node is sent to a user receiving end along the downlink path; and a message of a user sending end received by a leaf node reaches the root node along the uplink path. Therefore, bidirectional transmission for an MPLS network message is implemented, and it makes the go-and-return paths for bidirectional message transmission same, which reduces the management complexity of the LSP effectively and is able to perform the message transmission with the IEEE 1588v2 clock synchronization in the MPLS network.

Another technical problem to be solved by the present invention is to provide a method for performing grafting on an established bidirectional P2MP LSP, a new node including a leaf node is added in the bidirectional P2MP LSP through the grafting, and the method comprises:
for all leaf nodes in the bidirectional P2MP LSP after adding the new node, starting from a root node, reexecuting a signaling flow of establishing the bidirectional P2MP LSP as mentioned above; or, only for the newly added leaf node, starting from the root node, sending Path messages carrying upstream labels to all downstream nodes on a sub-label switching path of which a destination address is the newly added leaf node one by one until the newly added leaf node receives a Path message, and then starting from the newly added leaf node, replying Resv messages carrying generalized labels to upstream nodes one by one until the root node receives a Resv message;
in the grafting process, a new node allocating an upstream label and a generalized label for the bidirectional P2MP LSP, creating and maintaining an uplink label forwarding table and a downlink label forwarding table of the bidirectional P2MP LSP on the current node; and the original nodes using the upstream labels and the generalized labels allocated for the bidirectional P2MP LSP, and updating the uplink label forwarding tables and the downlink label forwarding tables of the bidirectional P2MP LSP on the current nodes respectively.

With the above grafting method, grafting can be performed on the established bidirectional P2MP LSP to add one or more new nodes including the leaf node(s).

Another technical problem to be solved by the present invention is to provide a method for performing pruning on a bidirectional P2MP LSP established with the above method, and the method comprises:
in the P2MP LSP, for each leaf node to be removed, starting from the root node, sending a Path Tear message to the downstream nodes one by one until the Path Tear message is sent to each leaf node to be removed, each of nodes which save information about the leaf node to be removed related to the P2MP LSP deleting all the information about the leaf node to be removed related to the P2MP LSP, wherein all the information include information about the leaf node to be removed in the uplink label forwarding table and the downlink label forwarding table.

With the above pruning method, one or more leaf nodes can be removed from the bidirectional P2MP LSP.

### Brief Description of Drawings

FIG. 1 is an exemplary schematic diagram of a network structure for adopting a bidirectional P2MP LSP to transmit messages according to an embodiment of the present invention;
FIG. 2 is a schematic diagram of signaling for establishing a bidirectional P2MP LSP using an RSVP-TE protocol according to an embodiment 1 of the present invention;
FIG. 3 is a schematic diagram of signaling for adding a new leaf node to an established bidirectional P2MP LSP according to an embodiment 2 of the present invention; and
FIG. 4 is a schematic diagram of signaling for removing an existing leaf node from an established bidirectional P2MP LSP according to an embodiment 3 of the present invention.

### Preferred Embodiments of the Present Invention

The embodiments of the present invention will be illustrated in detail in combination with the accompanying drawings hereinafter. It needs to be illustrated that the embodiments in the present invention and characteristics in the embodiments can be combined with each other in the condition of no conflict.

### Embodiment 1

In this embodiment, a bidirectional P2MP LSP is established through a Path message and a Resv message, a generalized label carried in the Resv message is used for establishing a downlink path from a root node to a leaf node in the bidirectional P2MP LSP, and an upstream label carried in the Path message is used for establishing an uplink path from a leaf node to a root node in the bidirectional P2MP LSP.

A P2MP LSP downlink path consists of a plurality of source-to-leaf sub-Label Switching Paths (S2L sub-LSPs). These S2L sub-LSPs are established between one root node and a plurality of leaf nodes, and a node in a fork position combines these S2L sub-LSPs. A P2MP LSP uplink path consists of LSPs from one or more leaf nodes to the source node (multipoint-to-point). The P2MP LSP uplink path and the P2MP LSP downlink path form one bidirectional P2MP LSP jointly.

In this embodiment, the method for establishing a bidirectional Point to Multiple Point Label Switching Path (P2MP LSP) adopts an RSVP-TE protocol to establish the bidirectional P2MP LSP in a Multi-protocol Label Switching (MPLS) network, and the process includes the following steps.

Starting from a root node of the bidirectional P2MP LSP, a Path message carrying an upstream label used for an uplink path is sent to downstream nodes one by one, each node creates an uplink label forwarding table of the bidirectional P2MP LSP, thereby establishing the uplink path from leaf nodes to the root node of the bidirectional P2MP LSP;
after receiving the Path message, starting from the leaf nodes, the leaf nodes of the bidirectional P2MP LSP reply a Resv message carrying a generalized label used for a downlink path to upstream nodes one by one, each node creates a downlink label forwarding table of the bidirectional P2MP LSP, thereby establishing the downlink path from the root node to the leaf nodes of the bidirectional P2MP LSP; and
nodes passed by the uplink path of the bidirectional P2MP and the downlink path of the bidirectional P2MP LSP are the same.

The above step of establishing the uplink path and the downlink path of the bidirectional P2MP LSP can specifically include the following steps.

In step 1, the root node of the bidirectional P2MP LSP allocates an upstream label for the bidirectional P2MP LSP, sends a Path message carrying the upstream label allocated by the current node to a downstream node, creates and maintains an uplink label forwarding table of the bidirectional P2MP LSP on the current node.

Routing information about arriving at the leaf nodes can be configured on the root node, or the routing information about arriving at the leaf nodes also can be obtained by calculation. According to the existing RSVP-TE protocol, the Path message sent by the root node to the downstream nodes can carry information including a P2MP LSP identifier, a Sub-LSP destination address and a Sub-group identifier, and so on; the Path message is extended in this embodiment, the extended Path message also carries the upstream label used for establishing a path from the leaf nodes to the root node.

The establishment for label forwarding tables according to labels and interfaces please refer to contents of the RSVP-TE protocol.

In step 2, after receiving the Path message, an intermediate node of the bidirectional P2MP LSP uses an upstream label allocated for the bidirectional P2MP LSP, and if no upstream label is allocated for the bidirectional P2MP LSP, the intermediate node allocates an upstream label for the bidirectional P2MP LSP; and then the intermediate node sends a Path message carrying the upstream label allocated by the current node to the downstream nodes, creates and maintains an uplink label forwarding table of the bidirectional P2MP LSP on the current node.

With regard to the same branch node of the P2MP LSP, upstream labels allocated by the current node and carried in all Path messages sent to the downstream nodes on the same link are the same.

In step 3, after receiving the Path message, the leaf node of the bidirectional P2MP LSP establishes and maintains the uplink label forwarding table of the bidirectional P2MP LSP on the current node, allocates a generalized label for the bidirectional P2MP LSP, replies a Resv message carrying the generalized label allocated by the current node to the upstream node, establishes and maintains a downlink label forwarding table of the bidirectional P2MP LSP on the current node.

The Resv message can adopt a format specified in the existing RSVP-TE protocol.

In step 4, after receiving the Resv message, the intermediate node of the bidirectional P2MP LSP uses a generalized label allocated to the bidirectional P2MP LSP, and if no generalized label is allocated for the bidirectional P2MP LSP, the intermediate node allocates a generalized label for the bidirectional P2MP LSP; and then replies a Resv message carrying the generalized label allocated by the current node to the upstream nodes, establishes and maintains a downlink label forwarding table of the bidirectional P2MP LSP on the current node.

With regard to the same branch node of the P2MP LSP, generalized labels allocated by the current nodes and carried in a plurality of Resv messages sent to the upstream nodes on the same link are the same.

In step 5, after receiving the Resv message, the root node of the bidirectional P2MP LSP establishes and maintains a downlink label forwarding table of the bidirectional P2MP LSP on the current node, and the establishment for the bidirectional P2MP LSP is completed.

In the above process of establishing the bidirectional P2MP LSP, two label forwarding tables will be generated at each LSR node in the bidirectional P2MP LSP, one is an uplink label forwarding table, and the other is a downlink label forwarding table. After the root node of the bidirectional P2MP LSP receives a message sent by a user, each node searches the downlink label forwarding table, and forwards the message to a receiving terminal along the downlink path of the bidirectional P2MP LSP; after a leaf node of the bidirectional P2MP LSP receives a message sent by a user, each node searches the uplink label forwarding table, and forwards the message to a receiving terminal along the uplink path of the bidirectional P2MP LSP.

In an actual process of transmitting messages through the P2MP LSP, it can only include a process of transmitting the messages along the P2MP LSP downlink path, or it also can only include a process of transmitting the messages along the P2MP LSP uplink path, or it also can include the above two processes simultaneously, which can be specifically determined according to the actual need.

In the above process of establishing the bidirectional P2MP LSP, on one link between adjacent nodes, there can be a plurality of Path messages and a plurality of Resv messages, or there can be only one Path message and one Resv message, which corresponds to the following two message transmission modes respectively.

In mode 1, when the bidirectional P2MP LSP is established, for each leaf node, the root node sends one Path message to the corresponding downstream node; the intermediate node sends one Path message to the corresponding downstream node when receiving one Path message every time, and replies one Resv message to the upstream node when receiving one Resv message every time; wherein, each message carries a destination address of a source-to-leaf sub-LSP including a transmission link of the message, all the Path messages on the same link carry the same upstream label, and all the Resv messages on the same link carry the same generalized label.

In this mode, the number of pairs of the Path message sent between two terminal nodes of each link and the Resv message replied between two terminal nodes of each link is equal to the number of S2L sub-LSPs passed through the link. The intermediate node creates an uplink label forwarding table of the bidirectional P2MP LSP on the current node when receiving the first Path message, and updates the uplink label forwarding table when receiving the subsequent Path messages. Correspondingly, the intermediate node creates a downlink label forwarding table of the bidirectional P2MP LSP on the current node when receiving the first Resv message, and updates the downlink label forwarding table when receiving the subsequent Resv messages.

In mode 2, when the bidirectional P2MP LSP is established, the root node only sends one Path message to each downstream node, the intermediate node only sends one Path message to each downstream node and only replies one Resv message to the upstream node, and each message in each pair of the Path message and the Resv message carries destination addresses of all the source-to-leaf sub-LSPs including a transmission link of the message.

In this mode, only one Path message is sent and only one Resv message is replied between the two terminal nodes of each link.

Correspondingly, a system for establishing a bidirectional Point to Multiple Point Label Switching Path (P2MP LSP) provided by this embodiment includes a root node, an intermediate node and a leaf node of the bidirectional P2MP LSP, each node adopts message interaction of Resource ReSerVation Protocol-Traffic Engineering (RSVP-TE) to establish the bidirectional P2MP LSP, wherein:
the root node is used to: when starting to establish the bidirectional P2MP LSP, allocate an upstream label for the bidirectional P2MP LSP, send a Path message carrying the upstream label allocated by the current node to downstream nodes, create and maintain an uplink label forwarding table of the bidirectional P2MP LSP on the current node;
the intermediate node is used to: after receiving the Path message, use the upstream label allocated for the bidirectional P2MP LSP, if no upstream label is allocated for the bidirectional P2MP LSP, allocate an upstream label for the bidirectional P2MP LSP, send a Path message carrying the upstream label allocated by the current node to the downstream nodes, create and maintain an uplink label forwarding table of the bidirectional P2MP LSP on the current node; and
the leaf node creates and maintains an uplink label forwarding table of the bidirectional P2MP LSP on the current node respectively after receiving the Path message.

The root node is further used to: after receiving a Resv message, creates and maintains a downlink label forwarding table of the bidirectional P2MP LSP on the current node;
the intermediate node is further used to: after receiving the Resv message, use a generalized label allocated for the bidirectional P2MP LSP, if no generalized label is allocated for the bidirectional P2MP LSP, allocate a generalized label for the bidirectional P2MP LSP, reply a Resv message carrying the generalized label allocated by the current node to upstream nodes, create and maintain a downlink label forwarding table of the bidirectional P2MP LSP on the current node; and
the leaf node is further used to: after receiving the Path message, allocate a generalized label for the bidirectional P2MP LSP, reply a Resv message carrying the generalized label allocated by the current node to the upstream nodes, establish and maintain the downlink label forwarding table of the bidirectional P2MP LSP on the current node.

According to the two message transmission modes, functions of each node are:
for each leaf node, the root node sending one Path message to the corresponding downstream node; the intermediate node sending one Path message to the corresponding downstream node when receiving one Path message every time, and replying one Resv message to the upstream node when receiving one Resv message every time; wherein, each message sent or replied by the root node, the intermediate node and the leaf nodes respectively carries a destination address of a source-to-leaf sub-Label Switching Path (sub-LSP) containing a transmission link of the message, all the Path messages on the same link carry the same upstream label, and all the Resv messages on the same link carry the same generalized label; or
the root node sending only one Path message to each downstream node; the intermediate node sending only one Path message to each downstream node and replying only one Resv message to the upstream node; wherein, each message carries destination addresses of all source-to-leaf sub-LSPs containing the transmission link of the message.

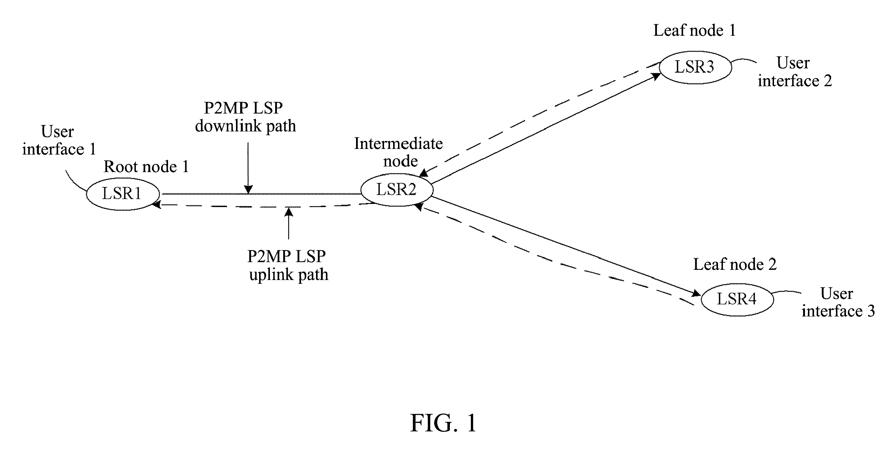

An MPLS network as shown in FIG. 1 is taken as an example to perform illustration below, it is required to establish, through an RSVP-TE protocol, a bidirectional P2MP LSP among a root node LSR1, an intermediate node LSR2 and two leaf nodes LSR3 and LSR4 in the MPLS network, and create a label forwarding table on each node, thereby implementing the bidirectional transmission of messages.

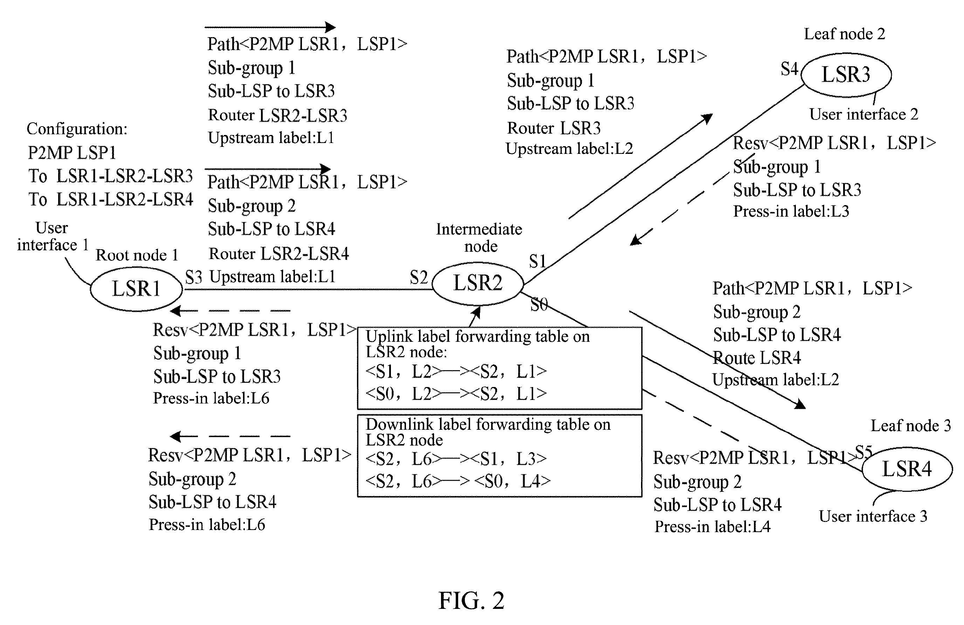

In this example, the above mode 1 that there can be a plurality of Path messages and a plurality of Resv messages on one link is taken as an example, but the present invention is not limited to this. Meanwhile, please referring to signaling and formats of the signaling as shown in FIG. 2, a process of establishing the bidirectional P2MP LSP according to this example includes the following steps.

The LSR1 searches routing information about arriving at the leaf nodes, discovers that the next hop is the LSR2, and allocates an upstream label L1 for the next hop LSR2. The LSR1 sends a Path message carrying the L1 to the LSR2 node. Since upstream labels allocated to the same P2MP LSP are the same on the same link, the upstream labels in two Path messages sent by the LSR1 to the LSR2 are the same. Meanwhile, an uplink label forwarding table: <S3, L1>-><user interface 1> is created on the LSR1, and a received uplink message of which the label is the L1 will be sent to the user interface 1.

After the LSR2 receives the Path message, if an upstream label has been allocated for one leaf node in the P2MP LSP, the LSR2 reuses this upstream label, sends a Path message carrying this upstream label to a corresponding downstream node, and forms an uplink label forwarding table at the same time. If no upstream label has been allocated for any leaf node in the P2MP LSP, an upstream label L2 is allocated and carried in the Path message to be sent to the LSR3 and the LSR4, and an uplink label forwarding table: <S1, L2>-><S2, L1>, <S0, L2>-><S2, L1> is created on the LSR2. When receiving a message of which the label is the L2, the LSR2 replaces the label with the L1 and sends the message.

After receiving the Path message carrying the upstream label L2, the leaf node LSR3 creates an uplink label forwarding table: <user interface 2>-><S4, L2>, replies a Resv message carrying a generalized label L3 to the LSR2 at the same time, and creates a downlink label forwarding table: <S4, L3>->< user interface 2>. The role of the uplink label forwarding table: <user interface 2>-><S4, L2> on the LSR3 is: after the LSR3 receives a message of a user, searching the uplink label forwarding table, pressing the generalized label L3 in the message and sending the message to the LSR2. The role of the downlink label forwarding table: <S4, L3>->< user interface 2> on the LSR3 is that the LSR3 forwards a received message of which the label is the L3 to a user. The processing after the leaf node LSR4 receives a Path message carrying the upstream label L2 is similar to the above process, which will not be repeated herein.

After receiving the Resv message, the intermediate node LSR2 sends a Resv message carrying a generalized label L6 to the LSR1 and creates a downlink label forwarding table: <S2, L6>-><S1, L3>, <S2, L6>-> <S0, L4>; a message of which the label is the L6 received by the LSR2 will be replicated into two, the labels thereof are respectively switched to the labels L3 and the L4 allocated for the LSR3 and the LSR4 and then the messages are sent to the LSR3 and the LSR4 respectively.

The root node receives the Resv message carrying the generalized label L6, creates a downlink label forwarding table: <user interface 1> -><S3, L6>; a message received from a user is pressed with the label L6 and sends to the LSR2. The establishment of the bidirectional P2MP LSP is completed.

The bidirectional P2MP LSP established by adopting the RSVP-TE in this embodiment can guarantee that the nodes passed by go-and-return paths of messages are identical and use the multicast technology to perform the message transmission1 Thus, it can meet that the requirement of the clock synchronization of the IEEE 1588v2 on the message transmission, and it can be applied to the clock synchronization of the IEEE 1588v2, thereby making the number of intermediate transmission nodes which can be crossed between a master clock and a slave clock in the IEEE 1588v2 unlimited in the premise of guaranteeing the same clock precision.

### Embodiment 2

In this embodiment, one or more new nodes including a leaf node are added to an existing bidirectional P2MP LSP, which is called as grafting.

The grafting is generally implemented by two methods.

The method 1 is performing signaling on the entire bidirectional P2MP LSP after adding the new nodes by a new Path message, in order to add the new nodes to the bidirectional P2MP LSP.

In this method, aiming at all the leaf nodes of the bidirectional P2MP LSP after adding the new nodes, which include the original leaf nodes and the new leaf nodes, the signaling flow of establishing the bidirectional P2MP LSP mentioned above can be reexecuted starting from the root node. For example, if the first message transmission mode mentioned above is adopted, it needs to add the new leaf nodes to the original Path message and refresh all the S2L sub-LSPs by new Path messages.

The method 2 is only performing signaling on influenced S2L sub-LSPs by the new Path messages, in order to add the new nodes to the bidirectional P2MP LSP, and it is unnecessary to perform signaling on the other S2L sub-LSPs.

The signaling flow under this method can be: only for the newly added leaf nodes, starting from the root node, sending the Path messages carrying the upstream labels to the downstream nodes one by one until the newly added leaf nodes receive the Path messages; and then, starting from the newly added leaf nodes, replying the Resv messages carrying the generalized labels to the upstream nodes one by one until the root node receives the Resv message(s).

No matter which method is adopted, in the grafting process of this embodiment, each original nodes preferably uses the upstream label and the generalized label which have been allocated for the bidirectional P2MP LSP, and updates the uplink label forwarding table and the downlink label forwarding table of the bidirectional P2MP LSP on the current node; and each new nodes allocates the upstream label and the generalized label for the bidirectional P2MP LSP, creates and maintains the uplink label forwarding table and the downlink label forwarding table of the bidirectional P2MP LSP on the current node.

According to the method of this embodiment, the root node in the system for the bidirectional Point to Multiple Point Label Switching Path (P2MP LSP) also can have the following functions, wherein,
the root node is further used to: when a new nodes containing leaf node(s) is added to the established bidirectional P2MP LSP, for all the leaf nodes of the bidirectional P2MP LSP after adding the new node, send the Path message(s) carrying the upstream label allocated by the current node to the downstream nodes; or
the root node is further used to: when a new nodes containing leaf node(s) is added to the established bidirectional P2MP LSP, only for the newly added leaf node(s), send the Path message(s) carrying the upstream label allocated by the current node to all the downstream nodes on the sub-label switching path(s) of which destination address(es) is the newly added leaf node(s).

The above grafting method 1 will be described still based on the MPLS network in FIG. 1 below, and the following flow is specifically included.

In step 1, for the existing leaf nodes and the newly added leaf node, the root node sends the Path message carrying the upstream label allocated by the current node to the downstream nodes, and updates the uplink label forwarding table of the bidirectional P2MP LSP on the current node at the same time.

The subsequent step 2 to step 5 are similar to the step 2 to step 5 in the embodiment 1, but with regard to the original nodes, it is required to update but not create the uplink label forwarding tables and the downlink label forwarding tables of the bidirectional P2MP LSP on the current node, which will not be repeated again.

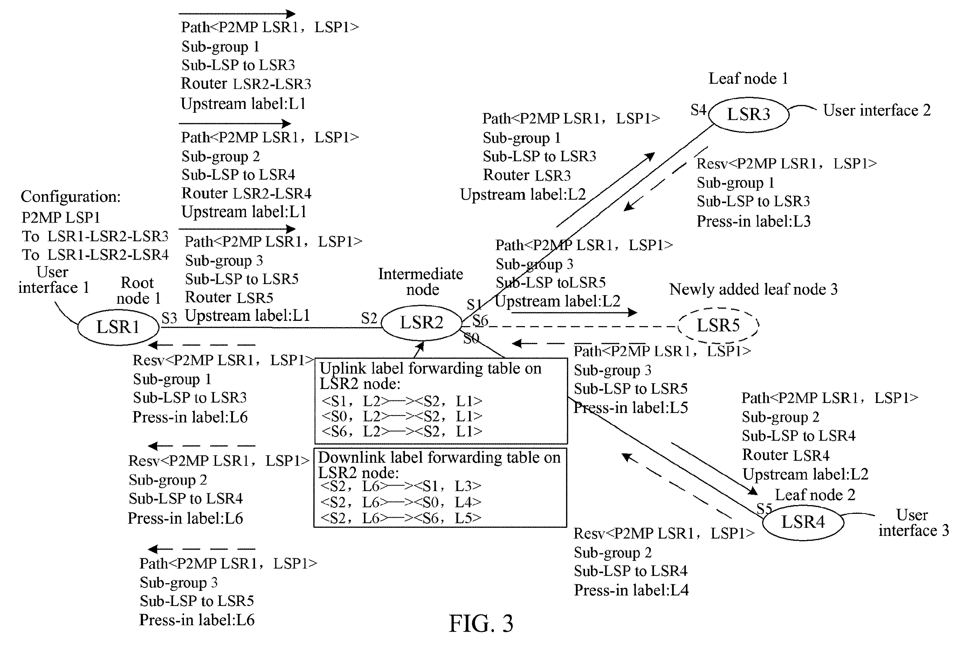

Please refer to signaling and formats as shown in FIG. 3, for the existing leaf nodes LSR3 and LSR4 and the newly added leaf node 3 (LSR5), the root node LSR1 sends the Path message carrying the upstream label L1 to the downstream node LSR2, and updates the uplink label forwarding table at the same time. Specifically, the LSR1 searches routing information about arriving at the leaf nodes, discovers that the next hop is LSR2, and allocates an upstream label L1 for the next hop LSR2. The LSR1 sends a Path message carrying the upstream label L1 to the LSR2 node. Meanwhile, since the upstream labels allocated for the same P2MP LSP are the same on the same link, the upstream labels in three Path messages sent by the LSR1 to the LSR2 are the same. If only one Path message is sent, it needs to carry destination addresses of three sub-LSPs in the Path message. A message with the label L1 received by the LSR1 is sent to a certain user interface. The subsequent steps are similar to the example in the embodiment 1, which will not be described in detail again.

Each LSR node of the updated P2MP LSP will form two label forwarding tables, and FIG. 3 only shows the two label forwarding tables formed by the intermediate node LSR2.

### Embodiment 3

In this embodiment, removing an existing leaf node is removed from an existing P2MP LSP, which is called as pruning.

The method of this embodiment includes the following flows.

In step 1, for a leaf node to be removed, a root node sends a Path Tear message to corresponding downstream node.

The Path Tear message carries information including a P2MP LSP identifier and a destination address of a Sub-LSP and so on.

If the root node has information about the leaf node to be removed related to the P2MP LSP, it deletes all the information about the leaf node to be removed related to the P2MP LSP.

In step 2, after receiving the Path Tear message, an intermediate node deletes all the saved information of the leaf node to be removed related to the P2MP LSP, and sends the Path Tear message to the downstream node.

In step 3, after receiving the Path Tear message, the leaf node to be removed deletes all the saved information about the leaf node to be removed related to the P2MP LSP.

According to the method of this embodiment, each node in the system for the bidirectional Point to Multiple Point Label Switching Path (P2MP LSP) also can have the following functions, wherein,
the root node is further used to: for each leaf node to be removed, send the Path Tear message to the downstream node located on a sub-label switching path in which the leaf node to be removed is located;
the intermediate node is further used to: after receiving the Path Tear message, send the Path Tear message to the downstream node located on the sub-label switching path in which the leaf nodes to be removed is located;
all the nodes which save information about the leaf node to be removed related to the P2MP LSP delete all the information about the leaf node to be removed related to the P2MP LSP.

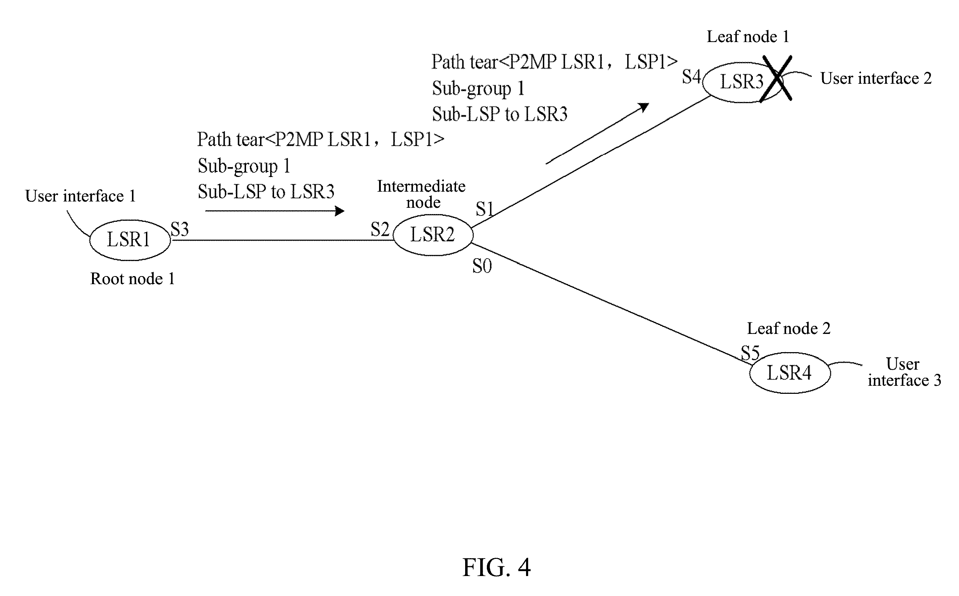

The MPLS network shown in FIG. 4 is taken as an example, it is assumed that the LSR3 is not the egress node of the bidirectional P2MP LSP any more, and a pruning process of the P2MP LSP specifically includes the following flows.

Since an egress of Path signaling of a Sub-group 1 is only the LSR3, as shown in FIG. 4, the LSR1 sends the Path Tear message carrying the Sub-group 1 and "a destination address of the Sub-LSP being LSR3" to the LSR2 so as to delete all the information related to the LSR3 and saved on the LSR2.

After receiving the Path Tear message, the branch node LSR2 deletes all the saved information about the LSR3 as the leaf node related to this P2MP LSP, and sends the Path Tear message to the LSR3.

After receiving the Path Tear message, the LSR3 deletes all the locally saved information about the LSR3 as the leaf node related to this P2MP LSP.

A plurality of S2L sub-LSPs of other sub-groups established by using other Path messages will not be influenced by the Path Tear message. For example, as shown in FIG. 4, a sub-branch from the LSR1 to the LSR4 is not influenced at all.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above embodiments also can be implemented by using one or more integrated circuits. Correspondingly, each module/unit in the above embodiments can be implemented in the form of hardware, and also can be implemented in the form of software function module. The present invention is not limited to any combination of hardware and software in a specific form.

The above description is only the preferred embodiments of the present invention, which is not used to limit the present invention. The present invention can have various modifications and changes for the skilled in the art. All the modifications, equivalent substitutions and improvements, etc., made within the spirit and principle of the present invention shall fall into the protection scope of the present invention.

### Industrial Applicability

In the embodiments of the present invention, the bidirectional P2MP LSP is established by adopting the RSVP-TE protocol; specifically, the P2MP LSP downlink path from the root node to the leaf nodes in the bidirectional P2MP LSP is established by carrying the generalized labels in the RSVP-TE Reserve messages, and the uplink path from the leaf nodes to the root node in the bidirectional P2MP LSP is established by carrying the upstream labels in the RSVP-TE Path messages. A message of a user sending end received by the root node is sent to a user receiving end along the downlink path; and a message of a user sending end received by a leaf node reaches the root node along the uplink path. Therefore, bidirectional transmission for an MPLS network message is implemented, and it makes the go-and-return paths for bidirectional message transmission same, which reduces the management complexity of the LSP effectively and is able to perform the message transmission with the IEEE 1588v2 clock synchronization in the MPLS network. With the grafting method, grafting can be performed on the established bidirectional P2MP LSP to add one or more new nodes including the leaf nodes. With the pruning method, one or more leaf nodes can be removed from the bidirectional P2MP LSP.

## Claims

1. A method for establishing a bidirectional Point to Multiple Point Label Switching Path (P2MP LSP), wherein, the bidirectional P2MP LSP is established by adopting an extended Resource ReSerVation Protocol-Traffic Engineering (RSVP-TE) in a Multi-protocol Label Switching (MPLS) network, the method comprising:
starting from a root node of the bidirectional P2MP LSP, sending a Path message carrying an upstream label used for an uplink path to downstream nodes one by one, each node creating and maintaining an uplink label forwarding table of the bidirectional P2MP LSP, thereby establishing the uplink path from leaf nodes to the root node of the bidirectional P2MP LSP;
after receiving the Path message, starting from a leaf node of the bidirectional P2MP LSP, the leaf node replying a Resv message carrying a generalized label used for a downlink path to upstream nodes which send the Path message to the current node one by one, each node creating and maintaining a downlink label forwarding table of the bidirectional P2MP LSP, thereby establishing the downlink path from the root node to the leaf node of the bidirectional P2MP LSP; and
nodes passed by the uplink path and the downlink path of the bidirectional P2MP LSP are the same.

2. The method according to claim 1, wherein, establishing the uplink path of the bidirectional P2MP LSP comprises:
the root node of the bidirectional P2MP LSP allocating an upstream label for the bidirectional P2MP LSP, sending a Path message carrying the upstream label allocated by the current node to a downstream node, creating and maintaining an uplink label forwarding table of the bidirectional P2MP LSP on the current node;
after receiving the Path message, an intermediate node of the bidirectional P2MP LSP using an upstream label allocated for the bidirectional P2MP LSP, if no upstream label is allocated for the bidirectional P2MP LSP, allocating an upstream label for the bidirectional P2MP LSP, sending a Path message carrying the upstream label allocated by the current node to a downstream node, creating and maintaining an uplink label forwarding table of the bidirectional P2MP LSP on the current node;
after receiving the Path message, the leaf node of the bidirectional P2MP LSP creating and maintaining an uplink label forwarding table of the bidirectional P2MP LSP on the current node.

3. The method according to claim 2, wherein, establishing the downlink path of the bidirectional P2MP LSP comprises:
after receiving the Path message, the leaf node of the bidirectional P2MP LSP allocating a generalized label for the bidirectional P2MP LSP, replying a Resv message carrying the generalized label allocated by the current node to an upstream node, creating and maintaining a downlink label forwarding table of the bidirectional P2MP LSP on the current node;
after receiving the Resv message, the intermediate node of the bidirectional P2MP LSP using a generalized label allocated for the bidirectional P2MP LSP, if no generalized label is allocated for the bidirectional P2MP LSP, allocating a generalized label for the bidirectional P2MP LSP, replying a Resv message carrying the generalized label allocated by the current node to an upstream node, creating and maintaining a downlink label forwarding table of the bidirectional P2MP LSP on the current node;
after receiving the Resv message, the root node of the bidirectional P2MP LSP creating and maintaining a downlink label forwarding table of the bidirectional P2MP LSP on the current node.

4. The method according to claim 1, 2 or 3, wherein,
when the bidirectional P2MP LSP is established, for each leaf node, the root node sends one Path message to a corresponding downstream node; an intermediate node sends one Path message to a corresponding downstream node when receiving one Path message every time, and replies one Resv message to an upstream node when receiving one Resv message every time; and each message respectively carries one destination address of a source-to-leaf sub-Label Switching Path (sub-LSP) containing a transmission link of the message, all the Path messages on the same link carry the same upstream label, and all the Resv messages on the same link carry the same generalized label; or
when the bidirectional P2MP LSP is established, the root node sends only one Path message to each downstream node, an intermediate node sends only one Path message to each downstream node and replies only one Resv message to an upstream node; and each message respectively carries destination addresses of all source-to-leaf sub-LSPs containing a transmission link of the message.

5. The method according to claim 1, wherein,
after establishments of the downlink path and the uplink path of the bidirectional P2MP LSP are completed, for a message sent by a user and received by the root node, each node searches the downlink label forwarding table of the current node, and forwards the message to a receiving terminal along the downlink path of the bidirectional P2MP LSP;
for a message sent by a user and received by a leaf node, each node searches the uplink label forwarding table of the current node, and forwards the message to a receiving terminal along the uplink path of the bidirectional P2MP LSP.

6. A method for performing grafting on an established bidirectional P2MP LSP, wherein, a new node including a leaf node is added in the bidirectional P2MP LSP through the grafting, the grafting method comprising:
for all leaf nodes in the bidirectional P2MP LSP after adding the new node, starting from a root node, reexecuting a signaling flow of establishing the bidirectional P2MP LSP according to any one of claims 1 to 5; or, only for the newly added leaf node, starting from the root node, sending Path messages carrying upstream labels to all downstream nodes on a sub-label switching path of which a destination address is the newly added leaf node one by one until the newly added leaf node receives a Path message, and then starting from the newly added leaf node, replying Resv messages carrying generalized labels to upstream nodes one by one until the root node receives a Resv message;
in the grafting process, a new node allocating an upstream label and a generalized label for the bidirectional P2MP LSP, creating and maintaining an uplink label forwarding table and a downlink label forwarding table of the bidirectional P2MP LSP on the current node; and the original nodes using the upstream labels and the generalized labels allocated for the bidirectional P2MP LSP, and updating the uplink label forwarding tables and the downlink label forwarding tables of the bidirectional P2MP LSP on the current nodes respectively.

7. A method for performing pruning on a bidirectional P2MP LSP established by the method according to any one of claims 1 to 5, comprising:
in the P2MP LSP, for each leaf node to be removed, starting from the root node, sending a Path Tear message to the downstream nodes one by one until the Path Tear message is sent to each leaf node to be removed, each of nodes which save information about the leaf node to be removed related to the P2MP LSP deleting all the information about the leaf node to be removed related to the P2MP LSP, wherein all the information include information about the leaf node to be removed in the uplink label forwarding table and the downlink label forwarding table.

8. A system for a bidirectional Point to Multiple Point Label Switching Path (P2MP LSP), comprising a root node, an intermediate node and a leaf node of the bidirectional P2MP LSP, wherein each node adopts message interaction of an extended Resource ReSerVation Protocol-Traffic Engineering (RSVP-TE) to establish the bidirectional P2MP LSP, wherein,
the root node is configured to: when starting to establish the bidirectional P2MP LSP, allocate an upstream label for the bidirectional P2MP LSP, send a Path message carrying the upstream label allocated by the current node to a downstream node, create and maintain an uplink label forwarding table of the bidirectional P2MP LSP on the current node;
the intermediate node is configured to: after receiving the Path message, use an upstream label allocated for the bidirectional P2MP LSP, if no upstream label is allocated to the bidirectional P2MP LSP, allocate an upstream label for the bidirectional P2MP LSP, send a Path message carrying the upstream label allocated by the current node to a downstream node, create and maintain an uplink label forwarding table of the bidirectional P2MP LSP on the current node; and
the leaf node is configured to: after receiving the Path message, create and maintain an uplink label forwarding table of the bidirectional P2MP LSP on the current node.

9. The system according to claim 8, wherein,
the root node is further configured to: after receiving a Resv message, create and maintain a downlink label forwarding table of the bidirectional P2MP LSP on the current node;
the intermediate node is further configured to: after receiving a Resv message, use a generalized label allocated for the bidirectional P2MP LSP, if no generalized label is allocated for the bidirectional P2MP LSP, allocate a generalized label for the bidirectional P2MP LSP, reply a Resv message carrying the generalized label allocated by the current node to an upstream node, create and maintain a downlink label forwarding table of the bidirectional P2MP LSP on the current node; and
the leaf nodes are further configured to: after receiving the Path message, allocate a generalized label for the bidirectional P2MP LSP, reply a Resv message carrying the generalized label allocated by the current node to an upstream node, create and maintain a downlink label forwarding table of the bidirectional P2MP LSP on the current node.

10. The system according to claim 9, wherein,
for each leaf node, the root node sends one Path message to a corresponding downstream node; the intermediate node sends one Path message to a corresponding downstream node when receiving one Path message every time, and replies one Resv message to an upstream node when receiving one Resv message every time; and each message sent or replied by the root node, the intermediate node and the leaf node respectively carries one destination address of a source-to-leaf sub-Label Switching Path (sub-LSP) containing a transmission link of the message, all the Path messages on the same link carry the same upstream label, and all the Resv messages on the same link carry the same generalized label; or
the root node sends only one Path message to each downstream node; the intermediate node sends only one Path message to each downstream node and replies only one Resv message to an upstream nodes; and each message respectively carries destination addresses of all source-to-leaf sub-LSPs containing a transmission link of the message.

11. The system according to claim 8 or 9, wherein,
the root node is further configured to: for each leaf node to be removed, send a Path Tear message to a downstream node located on a sub-label switching path in which the leaf node to be removed is located;
the intermediate node is further configured to: after receiving the Path Tear message, send a Path Tear message to a downstream node located on the sub-label switching path in which the leaf node to be removed is located; and
all nodes which save information about the leaf node to be removed related to the P2MP LSP delete all the information about the leaf nodes to be removed related to the P2MP LSP.

12. The system according to claim 8 or 9, wherein,
the root node is further configured to: when a new node containing a leaf node is added to the established bidirectional P2MP LSP, for all leaf nodes in the bidirectional P2MP LSP after adding the new node, send a Path message carrying an upstream label allocated by the current node to downstream nodes; or
the root node is further configured to: when a new node containing a leaf node is added to the established bidirectional P2MP LSP, only for newly added leaf node, send a Path message carrying an upstream label allocated by the current node to all downstream nodes on a sub-label switching path of which an destination address is the newly added leaf node.
